# EUROPÄISCHE PATENTSCHRIFT

(11) **EP 1 102 614 B1**
(45) Veröffentlichungstag und Bekanntmachung des Hinweises auf die Patenterteilung: **04.09.2002**
(21) Anmeldenummer: 99948685.5
(22) Anmeldetag: 21.07.1999
(51) Int. Cl.: A63H 27/133, B64C 27/82

(54) **MODELLHUBSCHRAUBER**
MODEL HELICOPTER
MODELE REDUIT D'HELICOPTERE

(30) Priorität: 05.08.1998 DE 19835385
(43) Veröffentlichungstag der Anmeldung: 30.05.2001
(73) Patentinhaber: Streich, Uli, 97782 Gräfendorf (DE)
(72) Erfinder: Streich, Uli, 97782 Gräfendorf (DE)
(74) Vertreter: Pöhner, Wilfried Anton, Dr.
(86) Internationale Anmeldenummer: DE9902283
(87) Internationale Veröffentlichungsnummer: WO00007683

(56) Entgegenhaltungen:
- DE-A- 4 010 362
- DE-U- 8 911 211
- US-A- 2 419 604
- US-A- 3 171 614

## Beschreibung

Die Erfindung bezieht sich auf einen Modellhubschrauber mit einem Rumpf, einem darin untergebrachten Motor, mit dem ein Rotor über eine annähernd vertikal verlaufende Antriebswelle verbunden ist, einer am mit dem Rumpf verbundenen Heckausleger angebrachten seitlichen Austrittsöffnung, durch die über ein im Rumpf befindliches Radialgebläse von außen angesaugte und über einen Kanal dem Heckausleger zugeführte Luft ausströmt und ein Drehmoment auf den Rumpf überträgt, das dem durch den Rotorantrieb auf den Rumpf übertragenen Drehmoment entgegenwirkt, wobei die durch ein erstes Schaufelrad des Gebläses bewegte Luft auf dem Weg durch den Rumpf den Motor durchströmt und von dort Wärme abführt.

Bei den meisten Modellhubschraubern wird entsprechend den Originalhubschraubern, durch den Antrieb des Rotors ein Drehmoment auf den Rumpf übertragen, das über einen am Ausleger angebrachten Heckrotor kompensiert wird. Als Alternative hierzu ist bei einigen Hubschraubertypen am Heck eine Austrittsöffnung angebracht, aus der in den Rumpf von außen angesaugte Luft ausströmt. Im Heckausleger erfährt die Luft eine Impulsänderung senkrecht zur Flugrichtung und überträgt eine Kraft auf den Heckausleger, aus der ein Drehmoment resultiert, das dem durch den Rotorantrieb verursachten entgegenwirkt (s. hierzu die US 2,419,604). Dieses Prinzip der Drehmomentkompensation wird auch in Modellhubschraubern eingesetzt, insbesondere in Nachbildungen entsprechender Originalhubschrauber. Bei derartigen Modellhubschraubern ist bekannt, die Luft im Rumpf über ein Gebläse in axialer Richtung von außen anzusaugen und in radialer Richtung auszustoßen, wo sie über einen Kanal in den Heckausleger geführt wird und dort vor Ausströmung durch die Austrittsöffnung die beschriebene Umlenkung erfährt. Die Seitensteuerung erfolgt, indem der Austrittsöffnung mit Hilfe einer Drosseleinrichtung in Abhängigkeit von der erwünschten Flugkurve mehr oder weniger Luft zugeführt wird. Zur Motorkühlung ist ein weiteres, unabhängig davon arbeitendes Gebläse vorhanden. Nachteilig bei derartigen Modellhubschraubern ist, daß die beiden unabhängig voneinander arbeitenden Gebläse insgesamt einen hohen konstruktiven Aufwand erfordern.

Die Erfindung hat sich dem gegenüber die Aufgabe gestellt, einen Modellhubschrauber der eingangs beschriebenen Art zu schaffen, bei dem der zur Drehmomentkompensation und Motorkühlung insgesamt erforderliche konstruktive Aufwand minimiert ist.

Diese Aufgabe wird erfindungsgemäß dadurch gelöst, daß das Radialgebläse zwei Schaufelräder aufweist, die koaxial auf derselben Welle angebracht sind und zwischen, den beiden Schaufelrädern eine Trennfläche angeordnet ist.

Grundgedanke der Erfindung ist, die durch das Gebläse im Rumpf von. außen angesaugte Luft zur Steuerung und auch zur Motorkühlung zu nutzen. Damit ist lediglich ein Gebläse erforderlich. Da der Motor der zur Kühlung durchströmenden Luft einen relativ hohen Strömungswiderstand entgegenstellt und zur Kühlung ohnehin nicht die gesamte angesaugte Luftmenge benötigt wird, soll nur ein Teil der angesaugten Luft den Motorraum durchströmen. Daher sind zwei Schaufelräder vorgesehen und lediglich die vom ersten Schaufelrad geförderte Luftmenge soll durch den Motorraum geführt werden. Aufgrund der koaxialen Anordnung auf derselben Antriebswelle wird der hierfür erforderliche konstruktive Aufwand minimiert. Die zwischen den beiden Schaufelrädern angeordnete Trennfläche ermöglicht eine definierte Aufteilung der angesaugten Luftmenge, ohne dabei einen unnötig hohen Strömungswiderstand hervorzurufen.
Die Größe des zweiten Schaufelrades im Vergleich zum ersten bestimmt die dem Motor zur Kühlung zugeführte Luftmenge.
Je nach den konstruktiven Gegebenheiten kann vom ersten Schaufelrad die Luft über den Motor zugeführt werden oder den Motor erst in Strömungsrichtung hinter dem Schaufelrad erreichen.

Die vom ersten Schaufelrad geförderte Luftmenge wird im Motor erwärmt und hat damit bei Zusammenführung mit der vom anderen Schaufelrad geförderten Luft eine höhere Temperatur, was aufgrund des dadurch bedingten Dichteunterschiedes in dem zwischen Rumpf und Heckausleger angebrachten Kanal unerwünschte Verwirbelungen der Strömung hervorrufen kann. Zur Abhilfe wird vorgeschlagen, das erste Schaufelrad vertikal oberhalb des zweiten anzuordnen, so daß sich bei Zusammenführung der beiden Luftströmungen die durch den Motor erwärmte Luft über der kühleren befindet und damit im Kanal eine stabile Schichtung gegeben ist, bei der kaum auftriebsbedingte Wirbel zu erwarten sind.

In einer bevorzugten Ausbildung der Erfindung sind die beiden Schaufelräder auf der Motorwelle angebracht. Dadurch unterbleiben durch Getriebe bedingte Leistungsverluste.

Wie durch den Stand der Technik bekannt, läßt sich der erfindungsgemäße Modellhubschrauber in seiner Kurvenlage durch unterschiedlich starke Drosselung der durch das Gebläse angetriebenen Luftmenge steuern. Durch den erhöhten Strömungswiderstand ist jedoch eine unnötig hohe Gebläseleistung bedingt, die zudem in Abhängigkeit von der vorgesehenen Flugkurve verliert, was Schwankungen in der zum Antrieb des Rotors verbleibenden Leistung zur Folge haben kann. Als Abhilfe wird vorgeschlagen, der ersten Austrittsöffnung gegenüber eine kleinere zweite Austrittsöffnung vorzusehen, durch die eine geringere. Luftmenge ausgestoßen wird und durch Umlenkung ein Drehmoment verursacht, das dem durch die erste Austrittsöffnung bedingten entgegenwirkt. Das aus dem heckseitigen Luftaustritt resultierende Drehmoment wird dabei mittels einer Leiteinrichtung gesteuert, die die insgesamt durch das Gebläse geförderte Luftmenge in einem einstellbaren Verhältnis auf die beiden Austrittsöffnungen verteilt. Damit wirkt auf das Gebläse ein konstant niedriger Strömungwiderstand. Die erste Austrittsöffnung ist größer als die zweite und ihr wird mehr Luft zugeführt, da das durch den heckseitigen Luftaustritt verursachte Drehmoment den durch den Rotorantrieb hervorgerufenen insgesamt kompensieren muß.

In bevorzugter Ausbildung der Erfindung beschreibt die Leiteinrichtung in einer dem Geradeausflug entsprechenden Stellung eine im wesentlichen in Längsrichtung des Rumpfes verlaufende Ebene. Sie verläuft damit in Strömungsrichtung und verursacht daher nur einen geringen Luftwiderstand. Durch die vertikale Ausrichtung ist eine seitliche Trennung zur Aufteilung auf die seitlichen Austrittsöffnungen in besonders einfacher Strömungsführung möglich. Zudem resultiert aus der Lufterwärmung des Motors unter Umständen ein vertikaler Temperaturgradient und damit auch ein Dichtegradient, so daß bei nicht vertikal stehender Leiteinrichtung die durchschnittliche Lufttemperatur an den Austrittsöffnungen unterschiedlich sein kann, was unerwünschte Auswirkungen auf das Steuerungsverhalten haben kann.

Die verstellbare Leiteinrichtung sollte möglichst, zumindest bei Geradeausflug des Hubschraubers, nicht belastet sein. Die Flächen, an denen die Strömung zu den seitlichen Austrittsöffnungen umgeleitet wird und an denen damit die aus Drehmoment verursachende Kraft angreift, sollten aus diesem Grunde möglichst hinter der Leiteinrichtung bleibend angebracht sein. Am effektivsten funktioniert dabei die Strömungsumlenkung, wenn sich die Leiteinrichtung daran nahtlos anschließt und zu diesem Zweck vorzugsweise.als an ihrem heckseitigen Ende drehbar gelagerte Klappe gebildet ist, die sich unabhängig von ihrer Stellung nahtlos an die Umlenkwände anschließen kann. Zum Kurvenflug des Hubschraubers wird die Klappe um die Drehachse gekippt und bewirkt damit eine Änderung der Luftmengenverteilung zwischen den Austrittsöffnungen. Eine Anströmung, die die Klappe unerwünschterweise mit einer Kraft belastet, läßt sich dabei allerdings nicht vermeiden.

Zur Unterstützung des Kurvenfluges können auch Seitenruder in Verbindung mit der Leiteinrichtung eingesetzt und gesteuert werden.

Eine weitere Verbesserung der Kurvenflugeigenschaften ist möglich, indem auch ein Höhenleitwerk eingesetzt und gemeinsam mit der Leiteinrichtung gesteuert wird.

Der pro Zeiteinheit durch eine seitliche Austrittsöffnung ausgestoßene Impuls, und damit die auf den Heckausleger wirkende Kraft, läßt sich bei gleicher durchströmender Luftmenge erhöhen, wenn die Austrittsöffnung als Düse gebildet ist. Dies ist sowohl bei Vorhandensein einer einzigen, als auch bei zwei einander entgegengerichteter Austrittsöffnungen möglich, von denen eine vorzugsweise aber beide, als Düse gebildet sein können.

Weitere Einzelheiten, Merkmale und Vorteile der Erfindung lassen sich dem nachfolgenden Beschreibungsteil entnehmen, in dem anhand von Zeichnungen ein Ausführungsbeispiel der Erfindung näher erläutert ist.
Dabei zeigen in prinzipienhafter Darstellung
- **Figur 1**: eine Übersicht über das Gebläse und
- **Figur 2**: den heckseitigen Luftaustritt.

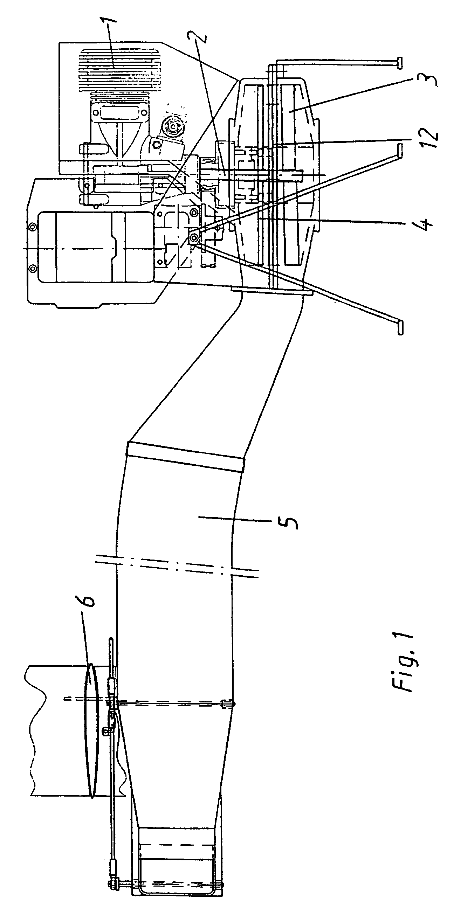

Figur 1 zeigt Teile des erfindungsgemäßen Hubschraubers in einer seitlichen, teilweise geschnittenen Darstellung. Das Gebläse besteht aus einem unteren ersten Schaufelrad (3) und einem oberen zweiten Schaufelrad (4) zwischen denen eine Trennfläche (12) angeordnet ist. Das erste Schaufelrad (3) saugt Luft von unten an und führt sie in radialer Richtung in einen Kanal (5), der zwischen dem Rumpf des Hubschraubers und dem Heckausleger gebildet ist. Das zweite Schaufelrad (4) saugt Luft annähernd von oben durch den Raum des Motores (1), wo sie erwärmt wird, an und führt sie dem Kanal (5) oberhalb der durch das andere Schaufelrad geförderten, kühleren Luft zu, sodaß aufgrund der Richtung des Temperaturgradienten eine stabile Schichtung entsteht. Beide Schaufelräder sind koaxial auf einer Welle (2) angebracht, die in diesem Falle die Motorwelle ist. Zur Unterstützung der Steuerung des Hubschraubers ist heckseitig ein Höhenleitwerk (6) angebracht.

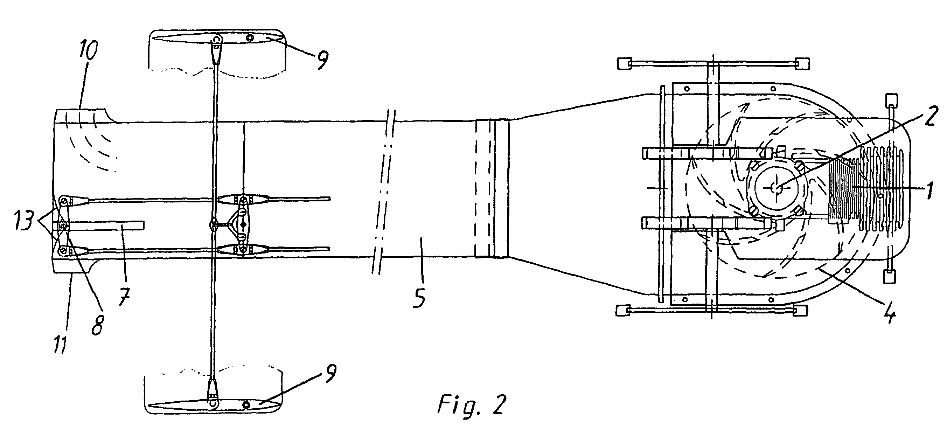

Figur 2 zeigt denselben Modellhubschrauber in teilweise geschnittener Darstellung in Draufsicht. Erkennbar ist hier wieder der Motor (1) und das zweite Schaufelrad (4) sowie die gemeinsame Welle (2) der Schaufelräder. Durch die Drehung des zweiten Schaufelrades (4) wird Luft von oben durch den Motor (1) angesaugt und radial in den Kanal, der zwischen Rumpf und Heckausleger des Hubschraubers verläuft, geführt. Durch eine größere seitliche Asutrittsöffnung (10) und eine ihr gegenüberliegende zweite kleinere Austrittsöffnung (11) strömt jeweils ein Teil der angesaugten Luftmenge aus. Dabei wird jeweils eine der zum Ausstoß durch die Austrittsöffnungen erforderlichen seitlichen Beschleunigung der Luft entgegengesetzte Kraftkomponente auf den Heckausleger übertragen und verursacht ein auf den mit dem Heckausleger verbundenen Rumpf wirkendes.Drehmoment. Das durch die erste Austrittsöffnung (10) hervorgerufene Drehmoment ist dabei größer als das durch die zweite seitliche Austrittsöffnung (11) erzeugte und ist dem durch den Rotorantrieb auf den Rumpf übertragenen entgegengesetzt, sodaß sich bei Geradeausflug die auf den Rumpf wirkenden Drehmomente aufheben. Über eine Leiteinrichtung, in diesem Fall als Klappe (7) gebildet, wird die Luft zwischen den Austrittsöffnungen (10, 11) aufgeteilt. In Strömungsrichtung hinter der Klappe (7) sind Umlenkflächen (13) angebracht, an denen der Luftstrom seitlich in Richtung der Austrittsöffnungen (10, 11) umgelenkt wird und an denen die das Drehmoment hervorgerufende Kraft angreift. An ihrem hinteren Ende ist die Klappe (7) an den Umlenkflächen (13) befestigt, die damit ihre Funktion unabhängig von der Klappenstellung erfüllen. Bei Geradeausflug des Hubschraubers verläuft die Klappe in Längsrichtung und nahezu keine durch die Strömung hervorgerufene Kräfte greifen daran an, während nach Schwenken um ihre Achse (8) zum Steuern des Hubschraubers die Klappe (7) auf einer Seite angeströmt wird, so daß zu ihrer Stabilisierung eine Haltekraft erforderlich ist. Aufgrund der vertikalen Anordnung führt die Klappe (7) beiden Austrittsöffnungen (10 bzw. 11) Luft aus allen Temperaturschichten des Kanals (5) zu und gewährleistet damit eine annähernd gleiche Austrittstemperatur. Beidseits des Heckauslegers ist jeweils ein Seitenruder (9) angebracht, das zusammen mit der Klapp (7) gesteuert wird und damit die Kurvenflugeigenschaften verbessert. Zusätzlich wird das in Figur 1 dargestellte Höhenleitwerk (6) bei seitlicher Steuerung des Hubschraubers angepaßt.

Insgesamt erhält man einen Modellhubschrauber, bei dem das durch den Rotorantrieb übertragene Drehmoment durch mindestens eine seitliche Luftaustrittsöffnung kompensiert wird, und bei dem die Luftführung zur seitlichen Austrittsöffnung in einfacher Bauweise bei relativ geringem Strömungswiderstand zusätzlich zur Motorkühlung genutzt wird.

## Patentansprüche

1. Modellhubschrauber mit einem Rumpf einem darin untergebrachten Motor (1), mit dem ein Rotor über eine annähernd vertikal verlaufende Antriebswelle (2) verbunden ist, einer am mit dem Rumpf verbundenen Heckausleger angebrachten ersten seitlichen Austrittsöffnung (10), durch die über ein im Rumpf befindliches Radialgebläse von außen angesaugte und über einen Kanal (5) dem Heckausleger zugeführte Luft ausströmt und ein Drehmoment auf den Rumpf überträgt, das dem durch den Rotorantrieb auf den Rumpf übertragenen Drehmoment entgegenwirkt, wobei die durch ein erstes Schaufelrad (4) des Gebläses bewegte Luft auf dem Weg durch den Rumpf den Motor (1) durchströmt und von dort Wärme abführt,
**dadurch gekennzeichnet, daß**
- das Radialgebläse zwei Schaufelräder (3, 4) aufweist,
- die koaxial auf derselben Welle (2) angebracht sind, und
- zwischen den beiden Schaufelrädern (3 bzw. 4) eine Trennfläche (12) angeordnet ist.

2. Modellhubschrauber nach Anspruch 1, **dadurch gekennzeichnet, daß** die durch das erste Schaufelrad (4) bewegte Luft den Motor (1) in Strömungsrichtung vor dem Schaufelrad (4) durchströmt.

3. Modellhubschrauber nach Anspruch 1, **dadurch gekennzeichnet, daß** die durch das erste Schaufelrad (4) bewegte Luft den Motor (1) in Strömungsrichtung hinter dem Schaufelrad (4) durchströmt.

4. Modellhubschrauber nach einem der vorhergehenden Ansprüche, **dadurch gekennzeichnet, daß** das erste Schaufelrad (4) in vertikaler Richtung über dem zweiten Schaufelrad (3) angeordnet ist.

5. Modellhubschrauber nach einem der vorhergehenden Ansprüche, **dadurch gekennzeichnet, daß** die Welle (2), auf der die beiden Schaufelräder (3, 4) angebracht sind, die Antriebswelle des Motors (1) ist.

6. Modellhubschrauber nach einem der vorhergehenden Ansprüche, **dadurch gekennzeichnet, daß**
- eine zweite seitliche Austrittsöffnung (11) am Heckausleger angebracht ist,
- die der ersten Austrittsöffnung (10) gegenüber liegt,
- kleiner ist als die erste Austrittsöffnung (10),
- eine einstellbare Leiteinrichtung (7) die angesaugte Luft auf die beiden Austrittsöffnungen verteilt und
- die einstellbare Leiteinrichtung (7) der ersten Austrittsöffnung (10) mehr Luft zuführt als der zweiten (11).

7. Modellhubschrauber nach Anspruch 6, **dadurch gekennzeichnet, daß** die Leiteinrichtung (7) eine vertikale, im wesentlichen in Längsrichtung des Rumpfes verlaufende Ebene bestimmt.

8. Modellhubschrauber nach Anspruch 6 oder 7, **dadurch gekennzeichnet, daß** die Leiteinrichtung (7) eine an ihrem heckseitigen Ende drehbar gelagerte Klappe (7) ist.

9. Modellhubschrauber nach einem der Ansprüche 6 bis 8, **dadurch gekennzeichnet, daß** Seitenruder (9) vorhanden sind, die gemeinsam mit der Leiteinrichtung (7) gesteuert werden.

10. Modellhubschrauber nach Anspruch 9, **dadurch gekennzeichnet, daß** ein Höhenleitwerk (6) vorhanden ist, das gemeinsam mit der Leiteinrichtung (7) gesteuert wird.

11. Modellhubschrauber nach einem der vorhergehenden Ansprüche, **dadurch gekennzeichnet, daß** zumindest eine seitliche Austrittsöffnung (10 bzw. 11) als Düse gebildet ist.

## Claims

1. Model helicopter having a fuselage, an engine (1) accommodated therein, with which a rotor is connected via an approximately vertically extending drive shaft (2) lateral outlet opening (10), which is disposed on the tail boom connected to the fuselage and through which air, which is taken in from the outside and fed via a channel (5) to the tail boom, is exhausted and transmits a torque to the fuselage, which counteracts the torque transferred to the fuselage by the rotor drive, the air moved by a first blade-wheel (4) of the fan flowing through the engine on the passage through the fuselage and dissipating heat from there, **characterised in that**
- the radial fan has two blade wheels (3, 4),
- - which are mounted coaxially on the same shaft (2), and
- a baffle plane (12) is arranged between the two blade wheels (3 and 4).

2. Model helicopter according to claim 1,
**characterised in that** the air moved by means of the first blade wheel (4) flows through the engine (1) upstream of the blade wheel (4) in the flow direction.

3. Model helicopter according to claim 1
**characterised in that** the air moved by means of the first blade wheel (4) flows through the engine (1) downstream of the blade wheel (4) in the flow direction.

4. Model helicopter according to one of the preceding claims, **characterised in that** the first blade wheel (4) is arranged vertically above the second blade wheel (3).

5. Model helicopter according to one of the preceding claims, **characterised in that** the shaft (2) on which the two blade wheels (3, 4) are mounted is the drive shaft of the engine (1).

6. Model helicopter according to one of the preceding claims, **characterised in that**
- a second lateral outlet opening (11) is disposed on the tail boom,
- and is located opposite the first outlet opening (10),
- is smaller than the first outlet opening (10),
- an adjustable baffle device (7) distributes the intake air to the two outlet openings, and
- the adjustable baffle device (7) guides more air to the first outlet opening (10) than to the second (11).

7. Model helicopter according to claim 6,
**characterised in that** the baffle device (7) defines a vertical plane extending essentially in the longitudinal direction of the fuselage.

8. Model helicopter according to claim 6 or 7,
**characterised in that** the baffle device (7) is a flap pivotably mounted at its tail end (7).

9. Model helicopter according to one of claims 6 to 8, **characterised in that** lateral rudders (9) are present, which are controlled jointly with the baffle device (7).

10. Model helicopter according to claim 9,
**characterised in that** an elevator unit (6) is present, which is controlled jointly with the baffle device (7).

11. Model helicopter according to one of the preceding claims, **characterised in that** at least one of the outlet openings (10 and 11) is formed as a nozzle.

## Revendications

1. L'invention concerne un hélicoptère modèle réduit composé d'un corps renfermant un moteur (1) relié à un rotor par l'intermédiaire d'un arbre de transmission (2) approximativement vertical, et un premier orifice de sortie latéral (10) au niveau de la queue, par lequel l'air extérieur aspiré par une soufflante radiale située à l'intérieur du corps, et transporté vers la queue dans un canal (5), est expulsé et transmet un couple au corps, agissant dans le sens opposé au couple transmis au corps par le rotor, l'air mû par une première roue à aubes (4) de la soufflante et traversant le corps, passant sur le moteur (1) et en dissipant la chaleur, **caractérisé en ce que**
- la soufflante radiale renferme deux roues à aubes (3, 4),
- les deux roues à aubes coaxiales sont montées sur le même arbre (2), et
- une surface de séparation (12) se trouve entre les deux roues à aubes (3 et 4).

2. Hélicoptère modèle réduit selon la revendication 1, **caractérisé en ce que** l'air mû par la première roue à aubes (4) traverse le moteur (1) dans le sens de l'écoulement, en amont de la roue à aubes (4).

3. Hélicoptère modèle réduit selon la revendication 1, **caractérisé en ce que** l'air mû par la première roue à aubes (4) traverse le moteur (1) dans le sens de l'écoulement, en aval de la roue à aubes (4).

4. Hélicoptère modèle réduit selon l'une des revendications précédentes, **caractérisé en ce que** la première roue à aubes (4) est disposée à la verticale au-dessus de la deuxième roue à aubes (3).

5. Hélicoptère modèle réduit selon la revendication 1, **caractérisé en ce que** l'arbre (2) sur lequel sont montées les deux roues à aubes (3, 4), est simultanément l'arbre du moteur (1).

6. Hélicoptère modèle réduit selon la revendication 1, **caractérisé en ce que**
- la queue est pourvue d'un deuxième orifice de sortie (11),
- le deuxième orifice de sortie (11) est situé en face du premier orifice de sortie (10),
- le deuxième orifice de sortie (11) est plus petit que le premier orifice de sortie (10),
- un système de direction (7) répartit l'air aspiré entre les deux orifices de sortie et
- le système de direction réglable (7) envoie plus d'air vers le premier orifice de sortie (10) que vers le deuxième orifice de sortie (11).

7. Hélicoptère modèle réduit selon la revendication 6, **caractérisé en ce que** le système de direction (7) décrit un plan vertical principalement situé dans le sens longitudinal du corps.

8. Hélicoptère modèle réduit selon la revendication 6 ou 7, **caractérisé en ce que** le système de direction (7) a la forme d'un clapet (7) pivotant à son extrémité postérieure

9. Hélicoptère modèle réduit selon l'une des revendications 6 à 8, **caractérisé en ce que** l'appareil est doté d'un empennage latéral (9) de chaque côté, ces empennages étant pilotés avec le système de direction (7).

10. Hélicoptère modèle réduit selon la revendication 9, **caractérisé en ce que** l'appareil est doté d'un empennage d'altitude (6), piloté avec le système de direction (7).

11. Hélicoptère modèle réduit selon l'une des revendications 6 à 8, **caractérisé en ce que** au moins l'un des orifices de sortie (10 et 11) se présente sous forme de buse.
